# EUROPÄISCHE PATENTSCHRIFT

(11) **EP 2 193 958 B1**
(45) Veröffentlichungstag und Bekanntmachung des Hinweises auf die Patenterteilung: **25.01.2012**
(21) Anmeldenummer: 09177565.0
(22) Anmeldetag: 01.12.2009
(51) Int. Cl.: B60R 5/04

(54) **Ladevorrichtung für einen Gepäckraum eines Pkw**
Loading device for a luggage compartment of a passenger vehicle
Dispositif de charge pour un compartiment à bagage d'un véhicule particulier

(30) Priorität: 02.12.2008 DE 102008044282
(43) Veröffentlichungstag der Anmeldung: 09.06.2010
(73) Patentinhaber: Witter, Fredy, 99869 Eschenbergen (DE)
(72) Erfinder: Witter, Fredy, 99869 Eschenbergen (DE)
(74) Vertreter: Engel, Christoph Klaus

(56) Entgegenhaltungen:
- DE-A1- 10 037 702
- DE-A1-102006 046 094
- DE-U1- 29 713 739
- FR-A- 2 756 242
- US-A- 2 953 287

## Beschreibung

Die Erfindung betrifft eine Ladevorrichtung für einen Gepäckraum eines Pkw gemäß dem Oberbegriff des Anspruchs 1.

Viele Pkw-Typen haben einen Gepäckraum mit einer erhöhten Ladekante. Durch diese Ladekante ist insbesondere das Ein- und Ausladen schwerer Gegenstände, wie beispielsweise Getränkekisten oder größere Einkäufe, erheblich erschwert. Gerade bei Limousinen ist der hintere Bereich des Gepäckraums schwer zugänglich, da sich der Nutzer zum Erreichen dieses Bereichs über die Ladekante beugen und weit in den Gepäckraum hinein greifen muss. Das Entnehmen schwerer Gegenstände aus diesem hinteren Bereich macht erhebliche Schwierigkeiten und stellt eine ungesunde Belastung für die Wirbelsäule des Nutzers dar.

Die US2 953287 beschreibt ein ausschwenkbares Gepäck-Gestell mit Korb für den Kofferraum eines PKW. Das Gestell ist im Kofferraum lösbar geverspannt. Der Korb wird über gelenkig schwenk- und klappbare Beine aus dem Kofferraum heraus in eine Beladestellung gehoben, dabei wird viel Platz in vertikaler Richtung benötigt.

Teilweise werden im Gepäckraum der Pkws Zwischenböden eingebaut, um eine Be- und Entladung zu erleichtern. Wenn das gesamte Volumen des Gepäckraumes nutzbar sein soll, muss der Zwischenboden ganz oder teilweise zurückgeklappt werden.

Die DE 100 37 702 A1 betrifft eine Vorrichtung für den Kofferraum eines PKW, die ein einfaches Verstauen und Entnehmen von leichten Gegenständen in bzw. aus einem im Kofferraum vorgesehenen Fach und außerdem eine Abteilung des Kofferraumes ermöglicht. Die Vorrichtung weist zwei Seitenwände mit jeweils einer Führung in Form eines Schlitzes auf, in welchem jeweils ein hinterer Zapfen des Fachs geführt ist. Das Fach ist über diese Führung in verschiedene Positionen verschwenkbar.

In der DE 10 2006 046 094 A1 ist ein Ladesystem zur Unterbringung eines Wagens (Kinderwagen, Einkaufswagen) im Kofferraum eines Fahrzeuges beschrieben. Der Wagen kann samt Fahrgestell in Einhandbedienung in die Aufnahmebox im Kofferraum verladen werden.

Der Erfindung liegt daher die Aufgabe zugrunde, eine Ladevorrichtung für einen Pkw mit einem Gepäckraum mit einer Ladekante zu schaffen, welche einfach und preiswert herstellbar ist und ein besonders einfaches Ein- und Ausladen insbesondere von schweren Gegenständen ermöglicht.

Die Aufgabe wird durch eine Ladevorrichtung mit den Merkmalen des Anspruchs 1 gelöst.

Die erfindungsgemäße Ladevorrichtung umfasst ein im Gepäckraum eines Pkw lösbar zu befestigendes Ladegestell zur Aufnahme eines Ladekorbes.

Der Ladekorb ist vorzugsweise in seitlichen Führungen des Ladegestells geführt. Während des Ziehens am Ladekorb aus dem Gepäckraum heraus wird dieser bis auf die Höhe einer Ladekante angehoben und aus dem Gepäckraum herausragend in eine Beladestellung verfahren.

Das Ladegestell umfasst zwei Seitenwände, welche vorzugsweise durch Streben oder durch einen Boden miteinander verbunden sind. Die seitlichen Führungen sind in dieser Ausführungsform durch eine in jeder Seitenwand vorgesehene Nut und durch eine Rolle gebildet. Die Nut in der Seitenwand verläuft dabei von einer hinteren unteren Ecke bis in eine nahe der Ladekante gelegene vordere obere Ecke kurvenförmig. Der Ladekorb trägt an jeder seiner Seitenwände einen Zapfen, welcher in dieser Nut geführt ist. Die Rolle ist an der vorderen oberen Ecke jeder Seitenwand (im eingebauten Zustand nahe der Ladekante) vorgesehen und ragt mit ihrer Kreisfläche in Richtung der gegenüberliegenden Seitenwand, sodass sie beim Herausziehen des Ladekorbes an dessen abgeschrägter Vorderseite und anschließend an dessen Boden abrollt.

Das Ladegestell ist vorzugsweise in seiner Höhe und/oder in seiner Tiefe separat verstellbar. Damit kann es vorteilhafterweise unterschiedlichen Pkw-Typen und deren Gepäckräumen angepasst werden. Es ist aber ebenso denkbar, verschiedene Ladevorrichtungen speziell angepasst für verschieden Pkw-Typen vorzusehen.

Das Ladegestell ist vorzugsweise im Gepäckraum verspannt, sodass einerseits beim Einbau keine Veränderungen am Fahrzeug vorgenommen werden müssen und die Ladevorrichtung einfach, komplett und ohne Rückstände wieder entfernbar ist. Dies ist zweckmäßig, wenn das gesamte Gepäckraumvolumen benötigt wird.

Die Tiefenverstellung dient vorzugsweise der Verspannung des Ladegestells im Gepäckraum des Pkws, wobei dies in einer bevorzugten Ausführungsform durch einen Spannmechanismus erfolgt. Der Spannmechanismus wird durch jeweils einen in jeder Seitenwand horizontal verschiebbaren Spannstempel und einen Schnellspannverschluss zur Fixierung der Lage des Spannstempels in der Seitenwand gebildet.

Durch die Höhenverstellbarkeit der Ladevorrichtung wird erreicht, dass diese besonders einfach an verschieden hohe Ladekanten verschiedener Pkw-Typen anpassbar ist. Im einfachsten Falle ist an jeder der Ladekante zugewandten unteren Ecke einer Seitenwand ein Stellmittel, beispielsweise ein Winkel mit einer Einstellschraube, vorgesehen, wobei durch eine Höhenverstellung des Winkels die der Ladekante zugewandte Seite des Ladegestells relativ zum Boden des Gepäckraumes angehoben oder abgesenkt werden kann.

In der Beladestellung ragt der Lagekorb aus dem Gepäckraum des Pkws heraus und ist vorzugsweise auf der Ladekante abgestützt. Dabei ist am Ladegestell eine Haltevorrichtung vorgesehen, welche den Ladekorb in der Beladestellung sichert. Die Haltevorrichtung ist in der einfachsten Ausführungsform ein Band, welches einenendes an einer hinteren Ecke mit dem Ladegestell verbunden ist, wobei das andere Ende des Bandes mit der Rückseite des Ladekorbes verbunden ist. Befindet sich der Ladekorb in der Beladestellung, so ist das Band straff gespannt, was ein Abkippen des Korbes verhindern kann. Die Haltevorrichtung kann aber auch durch einen anderen Mechanismus, z.B. einen Hebel- oder Rastmechanismus, gebildet werden.

Ladegestell und Ladekorb sind vorzugsweise aus Kunststoff, Leichtmetall oder einem Draht- oder Kunststoffgeflecht, oder auch aus Holz gefertigt.

In einer besonders bevorzugten Ausführungsform umfasst die Ladevorrichtung weiterhin ein Fahrgestell, welches in der Beladestellung unterhalb des Ladekorbes fixierbar ist.

Der Ladekorb ist in dieser Ausführungsform aus dem Ladegestell lösbar, sobald das Fahrgestell Bodenkontakt hat. Der Vorteil dieser Ausführungsform ist insbesondere darin zu sehen, dass der Ladekorb mit Fahrgestell beispielsweise als Einkaufswagen verwendet werden kann. Ein anstrengendes und zeitaufwändiges Umladen der Einkäufe kann dadurch entfallen.

Das Fahrgestell kann dabei einfach zusammensteckbar sein oder in den Boden des Ladekorbes integriert und beim Ausziehen des Ladekorbes in die Beladestellung nach unten ausklappbar sein.

Eine bevorzugte Ausführungsform der Erfindung wird nachfolgend anhand der Figuren näher erläutert. Es zeigen:
- Fig. 1:: eine schematische räumliche Ansicht einer erfindungsgemäßen Ladevorrichtung;
- Fig. 2:: eine schematische Seitenansicht der Ladevorrichtung gemäß Fig. 1 in eingebautem Zustand in einem Pkw;
- Fig. 3:: die Ladevorrichtung gemäß Fig. 2 in einer Beladestel- lung;
- Fig. 4:: einen Ladekorb mit einem Fahrgestell in zwei Ansich- ten; und
- Fig. 5:: eine Seitenansicht eines Ladekorbs mit ausklappbarem Fahrgestell.

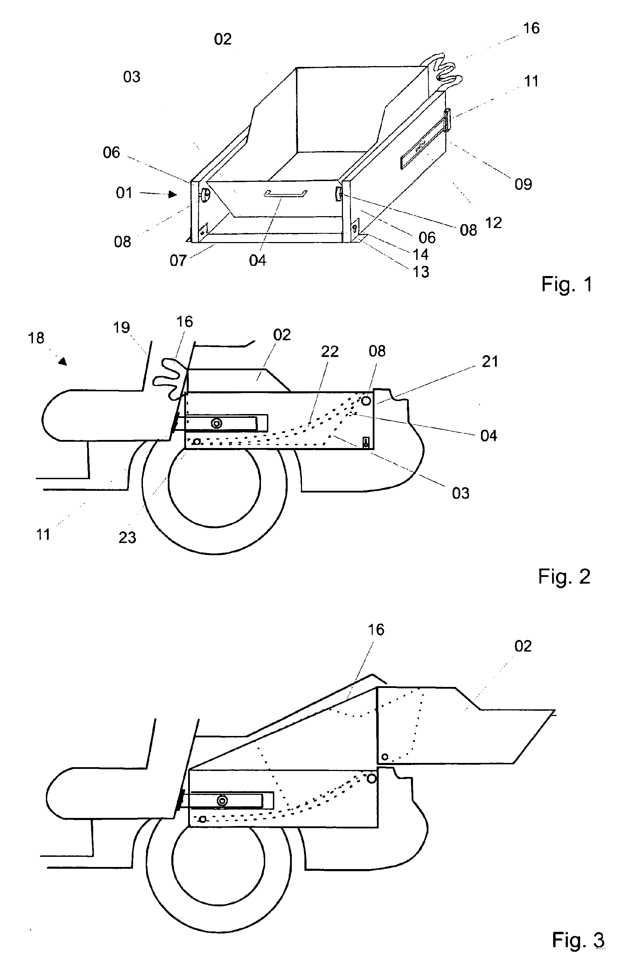

Fig. 1 zeigt eine erfindungsgemäße Ladevorrichtung in einer schematischen räumlichen Darstellung. Die Ladevorrichtung umfasst ein Ladegestell 01 und einen Ladekorb 02. Der Ladekorb 02 ist innerhalb des Ladegestells 01 angeordnet. An seiner Vorderseite 03 ist der Ladekorb nach unten und hinten abgeschrägt, um ein erleichtertes Herausziehen und Anheben zu ermöglichen. Zu diesem Zweck ist außerdem ein Griff 04 an der Vorderseite 03 des Ladekorbes 02 angebracht.

Das Ladegestell 01 umfasst in der dargestellten Ausführungsform zwei Seitenwände 06, welche mittels Streben 07 miteinander verbunden sind. An den Seitenwänden 06 ist jeweils auf der einander zugewandten Seite eine Rolle 08 vorgesehen, an welcher beim Herausziehen des Ladekorbes 02 aus dem Ladegestell 01 zunächst die Vorderseite 03 des Ladekorbes 02 und anschließend der Boden des Ladekorbes 02 abrollen. Beim Herausziehen des Ladekorbes 02 wird dabei durch das Abrollen der Ladekorb während des Herausziehens durch diese Führung auch angehoben.

Ein Spannmechanismus 09 ist an den Seitenwänden 06 vorgesehen, um die Tiefe des Ladegestells 01 dem Gepäckraum des Pkws anzupassen. Der Spannmechanismus 09 umfasst in der dargestellten Ausführungsform einen horizontal verschiebbaren Spannstempel 11 und einen Schnellspannverschluss 12 zur Fixierung der Lage des Spannstempels 11.

Als Stellmittel zur Verstellung der Höhe der Ladevorrichtung ist an jeder Seitenwand 06 ein Winkel 13 mit einer Stellschraube 14 vorgesehen. Die Stellschraube 14 kann beispielsweise in verschiedenen Rastungen der Seitenwand 06 befestigt werden, um die Höheneinstellung zu erreichen. Abwandlungen dieses Mechanismus können vom Fachmann einfach vorgenommen werden und sind selbstverständlich von der Erfindung umfasst.

Ein Band 16 ist als Haltevorrichtung mit einem Ende an einer Seitenwand 06 des Ladegestells 01 und mit dem anderen Ende an der Hinterkante des Ladekorbes 02 befestigt. Das Band 16 ist so lang, dass es im vollständig ausgefahren Zustand des Ladekorbs 02 straff gespannt ist und den Ladekorb dadurch hält. Die durch das Gewicht des Ladekorbs hervorgerufenen Kräfte und Momente werden durch das Band 16 teilweise zum hinteren Ende des Ladegestells 01 abgeleitet, womit sich die Hebelverhältnisse verbessern.

Fig. 2 zeigt in schematischer Darstellung den eingebauten Zustand der erfindungsgemäßen Ladevorrichtung in einem Gepäckraum 17 eines Pkws 18. Die Ladevorrichtung ist durch den Spannstempel 11 zwischen einer Rückenlehne 19 und einer Ladekante 21 des Pkws 18 verspannt. Dabei ist der Spannstempel 11 vorzugsweise in seiner Neigung verstellbar bzw. beim Spannen selbsteinstellend, um die Tiefenverstellung verschiedenen Pkw-Typen anzupassen.

In den Seitenwänden 06 ist zur seitlichen Führung neben den Rollen 08 jeweils eine Nut 22 vorgesehen, in welcher ein Zapfen 23, der fest mit dem Ladekorb 02 verbunden ist, beweglich geführt ist. Wird nun der Ladekorb 02 am Griff 04 aus dem Gepäckraum 17 heraus gezogen und dabei leicht angehoben, so wird die Vorderseite 03 des Ladekorbes 02 an den Rollen 08 geführt, während der Zapfen 23 in der Nut 22 geführt ist. Dabei wird der Ladekorb 02 angehoben und anschließend in die in Fig. 3 dargestellte Beladeposition gebracht.

In Fig. 3 ist nochmals in punktierter Weise der Verlauf des Ausziehens des Ladekorbes 02 in die Beladeposition dargestellt. In der Beladeposition ist das Band 16 gestrafft, sodass ein Vorkippen des Ladekorbes 02 nicht möglich ist. Weiterhin kann eine zusätzliche Verriegelung vorgesehen sein, welche ein Zurückrutschen des Ladekorbes 02 in den Gepäckraum 17 verhindert.

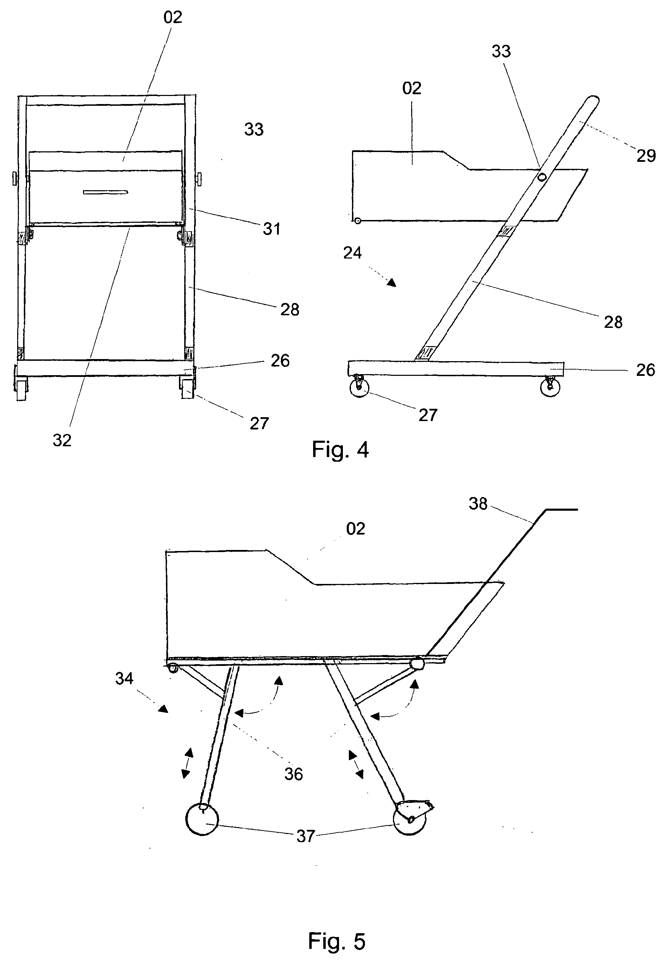

In einer besonders bevorzugten Ausführungsform kann in der dargestellten Beladeposition ein Fahrgestell 24 (Fig. 4, 5) am Ladekorb 02 angebracht sein oder befestigt werden. Das Fahrgestell 24 ist gemäß Fig. 4 in der einfachsten Form aus zusammensteckbaren Komponenten Fahrrahmen 26 mit Rädern 27, Verlängerungsholmen 28 und einem Traggestell 29 gebildet.

Das Traggestell 29 umfasst dabei zwei Seitenholme 31, welche vorzugsweise über mehrere Streben 32 oder einen Boden miteinander verbunden sind. Durch die Streben 32 oder den Boden wird eine Auflagefläche für den Ladekorb 02 gebildet. Das Traggestell 29 umfasst weiterhin Befestigungsschrauben 33, mit welchen der Ladekorb 02 am Traggestell 29 fixiert wird.

Durch verschieden lange Verlängerungsholme 28 oder teleskopartig verstellbare Verlängerungsholme 28 ist die Höhe des Fahrgestells 24 an verschiedene Kraftfahrzeugtypen anpassbar.

Die Komponenten des Fahrgestells 24 werden in dieser Ausführungsform separat im Gepäckraum 17 des Pkws 18 aufbewahrt und bei Bedarf zusammengesteckt. Auch hier können verschiedene Sets für verschiedene Pkw-Typen vorgesehen werden.

Fig. 5 zeigt eine weitere bevorzugte Ausführungsform eines Ladekorbes 02 mit einem integrierten Fahrgestell 34, welches beim Ausfahren des Ladekorbes 02 in die Beladeposition automatisch oder manuell ausgeklappt wird. Dabei sind Beine 36 des integrierten Fahrgestells 34 schwenkbar und ausziehbar am Boden des Ladekorbes 02 angeordnet, wie dies beispielsweise von Krankentragen bekannt ist. Anschließend wird der Ladekorb 02 vom Ladegestell 01 gelöst und kann als Einkaufswagen verwendet werden. Die Beine 36 tragen an ihren Enden Räder 37. Am integrierten Fahrgestell 34 ist weiterhin ein Fahrgriff 38 vorgesehen, welcher klappbar oder aufsteckbar ist.

Umgekehrt ist der Wagen nach dem Einkauf genauso einfach wieder im Gepäckraum 17 des Pkws 18 verstaubar. Dazu wird der Ladekorb 02 zunächst in der Beladestellung am Ladegestell 01 eingehängt und anschließen das Fahrgestell eingeklappt oder demontiert.

Wird der Ladekorb 02 nun in den Gepäckraum 17 hinein geschoben, erfolgt durch die seitlichen Führungen ein sanftes Absenken des Ladekorbes 02, bis dieser wieder vollständig im Ladegestell 01 positioniert ist.

### Bezugszeichenliste

- 01 -: Ladegestell
- 02 -: Ladekorb
- 03 -: Vorderseite
- 04 -: Griff
- 05 -: -
- 06 -: Seitenwand
- 07 -: Strebe
- 08 -: Rolle
- 09 -: Spannmechanismus
- 10 -: -
- 11 -: Spannstempel
- 12 -: Schnellspannverschluss
- 13 -: Winkel
- 14 -: Stellschraube
- 15 -: -
- 16 -: Band
- 17 -: Gepäckraum
- 18 -: Kraftfahrzeug
- 19 -: Rückenlehne
- 20 -: -
- 21 -: Ladekante
- 22 -: Nut
- 23 -: Zapfen
- 24 -: Fahrgestell
- 25 -: -
- 26 -: Fahrrahmen
- 27 -: Räder
- 28 -: Verlängerungsholm
- 29 -: Traggestell
- 30 -: -
- 31 -: Seitenholm
- 32 -: Strebe
- 33 -: Befestigungsschraube
- 34 -: Integriertes Fahrgestell
- 35 -: -
- 36 -: Bein

## Patentansprüche

1. Ladevorrichtung für einen Gepäckraum (17) eines Pkw (18) mit einem im Gepäckraum (17) lösbar zu befestigenden Ladegestell (01) zur Aufnahme eines Ladekorbes (02), welcher im Ladegestell (01) in seitlichen Führungen (08, 22) angeordnet ist, wobei die Führungen (08, 22) und der Ladekorb (02) derart gestaltet sind, dass beim Ziehen am Ladekorb (02) aus dem Gepäckraum (17) heraus der Ladekorb (02) bis auf die Höhe einer Ladekante (21) angehoben und aus dem Gepäckraum (17) herausragend in eine Beladestellung verfahren wird, **dadurch gekennzeichnet, dass** das Ladegestell (01) zwei Seitenwände (06) umfasst und die Führung in jeder Seitenwand (06) durch eine Nut (22) und durch eine Rolle (08) gebildet ist, wobei die Nut (22) in der Seitenwand (06) von einer hinteren unteren Ecke bis in eine nahe der Ladekante (21) gelegene vordere obere Ecke kurvenförmig verläuft und in der Nut (22) ein am Ladekorb (02) befestigter Zapfen (23) geführt ist, während die Rolle (08) an der vorderen oberen Ecke der Seitenwand (06) vorgesehen ist und mit ihrer Kreisfläche in Richtung der gegenüberliegenden Seitenwand (06) ragt, so dass sie beim Herausziehen des Ladekorbes (02) an dessen abgeschrägter Vorderseite (03) und an dessen Boden abrollt.

2. Ladevorrichtung nach Anspruch 1, **dadurch gekennzeichnet, dass** das Ladegestell (01) in seiner Höhe und/oder in seiner Tiefe verstellbar ist.

3. Ladevorrichtung nach Anspruch 2, **dadurch gekennzeichnet, dass** die Verstellung in der Tiefe durch einen Spannmechanismus (11, 12) erfolgt, welcher das Ladegestell (01) gegen eine Rückenlehne (19) des Pkw (18) verspannt.

4. Ladevorrichtung nach Anspruch 3, **dadurch gekennzeichnet, dass** der Spannmechanismus durch jeweils einen in jeder Seitenwand horizontal verschiebbaren Spannstempel (11) und einen Schnellspannverschluss (12) zur Fixierung der Lage des Spannstempels (11) an der Seitenwand (06) gebildet ist.

5. Ladevorrichtung nach einem der Ansprüche 2 bis 4, **dadurch gekennzeichnet, dass** die Verstellung in der Höhe durch ein Stellmittel (13, 14) erfolgt, welches an einer der Ladekante (21) zugewandten unteren Ecke jeder Seitenwand (06) angeordnet ist, wobei durch das Stellmittel (13, 14) die der Ladekante (21) zugewandte Seite des Ladegestelles (01) relativ zum Boden des Gepäckraumes (17) angehoben oder abgesenkt werden kann.

6. Ladevorrichtung nach einem der Ansprüche 1 bis 5, **dadurch gekennzeichnet, dass** am Ladegestell (01) eine Haltevorrichtung vorgesehen ist, die den Ladekorb (02) in der Beladestellung sichert.

7. Ladevorrichtung nach Anspruch 6, **dadurch gekennzeichnet, dass** die Haltevorrichtung ein Band (16) ist, welches mit einem seiner Enden am Ladegestell (01) und mit dem anderen Ende am Ladekorb (02) befestigt ist.

8. Ladevorrichtung nach einem der Ansprüche 1 bis 7, **dadurch gekennzeichnet, dass** sie weiterhin ein Fahrgestell (24) umfasst, welches in der Beladestellung unterhalb des Ladekorbes (02) fixierbar ist, wobei der am Fahrgestell (24) fixierte Ladekorb (01) aus dem Ladegestell (01) lösbar ist.

9. Ladevorrichtung nach Anspruch 8, **dadurch gekennzeichnet, dass** das Fahrgestell (24) aus mehreren Teilen zusammensteckbar ist.

10. Ladevorrichtung nach Anspruch 8 oder 9, **dadurch gekennzeichnet, dass** das Fahrgestell (24) in den Boden des Ladekorbes (02) integriert ist und beim Ausziehen des Ladekorbes (02) in die Beladestellung nach unten ausklappbar ist.

## Claims

1. Loading device for a luggage trunk (17) of an automobile (18) with a loading stage which is to be attached removably within the luggage trunk (17) for carrying a loading basket (02), which is arranged in the loading stage (01) in lateral guides (08, 22), whereas the guides (08, 22) and the loading basket (02) are formed in such way that when pulling the loading basket (02) out of the luggage trunk (17) the loading basket (02) is lifted up to the level of a trunk sill (21), and is moved into a loading position while sticking out of the luggage trunk (17), **characterized in that** the loading stage (01) comprises two side walls (06) and that the guide in each side wall (06) is formed by a slot (22) and by a roll (08), whereas the slot (22) in the side wall (06) runs curve-shaped from a back lower corner into a top front corner lying close to the trunk sill (21), and in the slot (22) a pin (23) is guided which is attached to the loading basket (02), while the roll (08) is provided at the top front corner of the side wall (05) and rises with its circular surface towards the opposing side wall (06), so that it is rolling along the bevelled front side (03) and the bottom of the loading basket (02) when the loading basket is pulled out.

2. Loading device according to claim 1, **characterized in that** the loading stage (01) is adjustable in its height and/or its depth.

3. Loading device according to claim 1, **characterized in that** the depth is adjusted by means of a gripping mechanism (11, 12) which braces the loading stage (01) against a seat back (19) of the automobile (18).

4. Loading device according to claim 3, **characterized in that** the gripping mechanism is formed respectively by a step block (11) being horizontally adjustable in each side wall and a quick-locking device (12) for fixing the position of the step block (11) at the side wall (06).

5. Loading device according to one of the claims 2 to 4, **characterized in that** the adjustment of the height is carried out by a setting means (13, 14) which is positioned at a lower corner facing the trunk sill (21) of each side wall (06), whereas the side of the loading stage (01) which faces the trunk sill (21) can be lifted or deepened relatively to the bottom of the luggage trunk (17) by said setting means (13, 14).

6. Loading device according to one of the claims 1 to 5, **characterized in that** a holding fixture is provided at the loading stage (01) which retains the loading basket (02) in the loading position.

7. Loading device according to claim 6, **characterized in that** the holding fixture consists of a band (16) which is fixed with its one end at the loading stage (01) and with its other end at the loading basket (02).

8. Loading device according to one of the claims 1 to 7, **characterized in that** it furthermore comprises a carriage (24) which can in loading position be fixed beneath the loading basket (02), whereas the loading basket (02) being fixed at the carriage (24) can be removed from the loading stage (01).

9. Loading device according to claim 8, **characterized in that** the carriage (24) can be plugged together of multiple pieces.

10. Loading device according to claim 8 or 9, **characterized in that** the carriage (24) is integrated in the bottom of the loading basket (02) and can be unfolded downwards when pulling out the loading basket (02) into the loading position.

## Revendications

1. Dispositif de chargement pour un porte-bagages (17) d'une voiture (18) comprenant un châssis de chargement (01), qui peut être fixé de façon amovible dans le porte-bagages (17), pour le logement d'un panier de chargement (02), lequel est disposé dans le bâti de chargement (01) dans des guides latéraux (08, 22), les guides (08, 22) et le panier de chargement (02) étant conçus de telle sorte que, lorsqu'on tire sur le panier de chargement (02) à partir du porte-bagages (17), le panier de chargement (02) est soulevé jusqu'à la hauteur d'une arête de chargement (21) et est déplacé dans une position de chargement en dépassant du coffre à bagages (17), **caractérisé en ce que** le bâti de chargement (01) comprend deux parois latérales (06) et le guide dans chaque paroi latérale (06) est formé par une rainure (22) et par un galet (08), la rainure (22) s'étendant à la façon d'une came dans la paroi latérale (06) à partir d'un angle inférieur arrière jusque dans un angle supérieur avant, situé à proximité de l'arête de chargement (21) et un tenon (23) fixé sur le panier de chargement (02) étant guidé dans la rainure (22), alors que le galet (08) est prévu sur l'angle supérieur avant de la paroi latérale (06) et dépasse par sa surface circulaire en direction de la paroi latérale (06) opposée, de sorte que, lorsqu'on sort en tirant le panier de chargement (02), il roule sur son côté avant (03) chanfreiné du panier et sur son fond.

2. Dispositif de chargement selon la revendication 1, **caractérisé en ce que** le bâti de chargement (01) peut être réglé dans sa hauteur et/ou dans sa profondeur.

3. Dispositif de chargement selon la revendication 2, **caractérisé en ce que** le réglage en profondeur s'effectue par un mécanisme de serrage (11, 12), lequel tend le bâti de chargement (01) contre un dossier (19) de la voiture (18).

4. Dispositif de chargement selon la revendication 3, **caractérisé en ce que** le mécanisme de serrage est formé par respectivement un poinçon de serrage (11) pouvant coulisser horizontalement dans chaque paroi latérale et par une fermeture à serrage rapide (12) pour la fixation de la position du piston de serrage (11) sur la paroi latérale (06).

5. Dispositif de chargement selon l'une des revendications 2 à 4, **caractérisé en ce que** le réglage en hauteur s'effectue par un moyen de réglage (13, 14), qui est disposé sur un angle inférieur, tourné vers l'arête de chargement (21), de chaque paroi latérale (06), le côté, tourné vers l'arête de chargement (21), du bâti de chargement (01) pouvant être soulevé ou abaissé par rapport au sol du porte-bagages (17) par le moyen de réglage (13, 14).

6. Dispositif de chargement selon l'une des revendications 1 à 5, **caractérisé en ce qu'**un dispositif de retenue, qui bloque le panier de chargement (02) dans la position de chargement, est prévu sur le bâti de chargement (01).

7. Dispositif de chargement selon la revendication 6, **caractérisé en ce que** le dispositif de retenue est une bande (16), qui est fixée par l'une de ses extrémités sur le bâti de chargement (01) et par d'autre extrémité sur le panier de chargement (02).

8. Dispositif de chargement selon l'une des revendications 1 à 7, **caractérisé en ce qu'**il comprend également un train de roulement (24), qui peut être fixé dans la position de chargement au-dessous du panier de chargement (02), le panier de chargement (01) fixé sur le train de roulement (24) pouvant être détaché du bâti de chargement (01).

9. Dispositif de chargement selon la revendication 8, **caractérisé en ce que** le train de roulement (24) peut être assemblé à partir de plusieurs parties.

10. Dispositif de chargement selon la revendication 8 ou 9, **caractérisé en ce que** le train de roulement (24) est intégré dans le fond du panier de chargement (02) est peut être déplié vers le bas lors de l'extraction du panier de chargement (02) dans la position de chargement.
